Europäisches Patentamt

European Patent Office

Office européen des brevets

(11) Veröffentlichungsnummer: **0 235 637 B1**

# (12) EUROPÄISCHE PATENTSCHRIFT

(45) Veröffentlichungstag der Patentschrift: 04.12.91

(21) Anmeldenummer: 87101987.3

(22) Anmeldetag: 12.02.87

(51) Int. Cl.5: **C02F 11/16, C05F 3/00, C05F 3/06, C05F 7/00, A01C 3/02**

(54) Verfahren und Vorrichtung zur Aufbereitung von Abwasserschlämmen organischer Herkunft.

(30) Priorität: 19.02.86 DE 3605253

(43) Veröffentlichungstag der Anmeldung:
09.09.87 Patentblatt 87/37

(45) Bekanntmachung des Hinweises auf die
Patenterteilung:
04.12.91 Patentblatt 91/49

(84) Benannte Vertragsstaaten:
BE DE FR GB IT NL

(56) Entgegenhaltungen:
EP-A- 0 153 582
DE-A- 2 452 316
DE-A- 2 703 842
US-A- 4 392 881
US-A- 4 559 073

EPA - Sludge Treatment and Disposal
S.79-80 BROCKHAUS Lexikon 1.Band, S.213 /
Water Research Vol.12, No.12
(1978),"Experiments armed at the Removal
of Phosphate by Electrochemical Methods"

(73) Patentinhaber: **Brösamle, Peter, Dipl.-Ing.**
**Lindenstrasse 18**
**W-2054 Wiershop(DE)**

(72) Erfinder: **Brösamle, Peter, Dipl.-Ing.**
**Lindenstrasse 18**
**W-2054 Wiershop(DE)**

(74) Vertreter: **Mey, Klaus-Peter, Dr.-Ing.**
**Dipl.-Wirt.-Ing.**
**Patentanwälte HEMMERICH-**
**MÜLLER-GROSSE-POLLMEIER-MEY Aachener**
**Strasse 710**
**W-5020 Frechen 4(DE)**

## Beschreibung

Die Erfindung bezieht sich auf ein Verfahren sowie eine Vorrichtung zur Aufbereitung von Gülle aus Betrieben mit Nutztierhaltung oder aus Hauskläranlagen. Bei Gülle handelt es sich um ein Kot-Harngemisch, das teilweise vermischt mit Einstreu und /oder Futterresten ist. Es fällt zumeist bei modern gehaltenen landwirtschaftlichen Nutztieren an.

Arbeitswirtschaftliche Erfordernisse führten dazu, daß die Veredelungswirtschaft mit landwirtschaftlichen Nutztieren mit der Produktion von Gülle gekoppelt ist. Die Nutztierhaltung ist häufig auch auf dem verstärkten Einsatz zugekaufter Futtermittel aufgebaut, wodurch entsprechend dem Zukauf mehr Abwasserschlämme produziert werden, als auf den anzurechnenden landwirtschaftlichen Nutzflächen an Futtermitteln produziert wurde und demnach als Pflanzendüngung im Kreislauf der Natur zurückzuführen wäre. Diese Gülleüberproduktion ist sehr häufig auf ganze Regionen ausgedehnt. Der Ferntransport der Gülle in Regionen geringerer Belastung für eine flächendeckende Beseitigung bzw. Nutzung als Volldünger wäre zudem sehr teuer.

Vertiefte Erkenntnisse über die Zusammenhänge zwischen landwirtschaftlicher Nutzung und Nitratbelastung im Grundwasser zwingen ebenfalls dazu, nach umweltfreundlichen Aufbereitungsverfahren für die Gülle zu suchen. Geht man davon aus, daß Gülle ein guter Volldünger ist, mit dem Vorzug, daß ca. 50 % der Pflanzennährstoffe in gelöster und damit rasch pflanzenverfügbarer Form enthalten sind, so bietet sich die Aufbereitung dieses Düngers zur Ausnutzung dieser Nährstoffe an.

Neben den nutzbaren Eigenschaften weist Gülle auch problematische Eigenschaften auf. So neigt Gülle zu Geruchsemissionen und während der Speicherung zur Bildung von Schwimm- und /oder Sinkschichten, die vor dem Ausbringen homogenisiert werden müssen. Die Schwimm-/Sinkschichten führen beim Ausbringen zur Bildung von Futter/Pflanzenverschmutzungen, Verschlämmungen des Bodens oder auch zur großflächigen Bodenbedeckung mit einem Filz. Speziell junge Pflanzen, bei denen die in der Gülle enthaltenen Pflanzennährstoffe für das Wachstum besonders interessant wären, neigen bei Begüllung zu Wachstumsstop, durch z. B. Verätzungen und auch durch den Filz, d. h. einen Luft- und/oder Lichtabschluß. Bei regelmäßiger Begüllung bildet sich eine typische Gülleflora, die durch die mit der Gülle ausgebrachten Samen ganz bestimmter Pflanzen gefördert wird. Ferner ist Gülle im unbehandelten Zustand für die Gare und die Kleinlebewesen des Oberbodens wenig förderlich, speziell wenn die Gülle in größeren Gaben ausgebracht wird.

Die in der Gülle enthaltenen Pflanzennährstoffe - speziell die Stickstofffraktionen, aber auch Kalium und z. T. Calcium - unterliegen einer erhöhten Gefahr der Auswaschung, das gilt insbesondere dann, wenn Gülle auf Flächen ausgebracht wird, die keine wachsenden Pflanzen tragen, d. h. im Zeitraum vom Spätsommer bis zum Frühjahr. Durch die Auswaschung von Güllenährstoffen ist bei regelmäßiger Gülleausbringung in Zeiten der Vegetationsruhe auf Dauer mit Nitratanreicherungen im Grundwasser zu rechnen. Diese Problematik kann nur gelöst werden, wenn keinerlei Gülleausbringung und sonstige Stickstoffdüngung erfolgt, solange Pflanzen und Boden in Winterruhe sind. Weiterhin darf die Gülledüngung nur auf warmem Oberboden und in wachsende Pflanzenbestände hinein erfolgen und in pflanzenphysiologisch verträglicher Form aufgebracht werden. Unbearbeitete Rohgülle bereitet außerdem Schwierigkeiten bei der exakten Verteilung und Dosierung sowie bei der Verregnung.

In der DE-A-33 12 145 wird ein Verfahren zur Wiederverwertbarkeit von Schlämmen ursprünglicher Art oder in jeder Art geänderter Beschaffenheit, insbesondere von Klärschlammen industrieller und kommunaler Wasser- und Abwasseraufbereitungsanlagen aufgezeigt, wobei bei den kommunalen Wasser- und Abwasseraufbereitungsanlagen auch Industriewasser und -abwasseranteile in beliebigem Verhältnis enthalten sein können, und die Feststoffkonzentrationen der Schlämme vorher beliebig hoch sein können, wobei die Aufbereitung dieser Schlämme in einem zweistufigen Verfahren erfolgt, wobei die erste Stufe des Verfahrens - die erforderliche Teilentwässerung - ausschließlich mit mobilen Entwässerungsanlagen erfolgt, und die zweite Stufe des Verfahrens in einer Langzeitkompostierung besteht, die im Freien ohne die üblichen Überbauungen und gegebenenfalls Umbauungen erfolgt. Eine dauerhafte und konstante Produktqualität sowie eine gesicherte Verwertung aller Verfahrensprodukte, die insbesondere bei der Aufbereitung von Gülle aus Betrieben mit Nutztierhaltung anfallen, kann auf diese Weise nicht gewährleistet werden.

Die EP-A-0 153 282 betrifft ein Verfahren zum Kompostieren von Schlamm aus Kläranlagen. Dieser Schlamm ist etwas völlig anderes als Gülle. Diese setzt sich bekanntlich aus einem Kot-Harngemisch zusammen, das teilweise noch Einstreu- und/oder Futterreste enthält. Schlamm aus Kläranlagen enthält dagegen einerseits eine Flüssigkeit in Qualität des geklärten Wassers und andererseits lebende und abgestorbene Bakterienstämme. Hierin sind weder Harnstoffe noch Kot enthalten. Auch Klärschlämme können ein ungünstiges $C : N$ - Verhältnis aufweisen, weswegen in dieser Druckschrift, die Zugabe von Holzbestandteilen, wie Sägemehl, Torf, Rinde etc. vorgeschlagen wird. Durch Zugabe von Polyelektrolyten zum Schlamm und Entwässern mittels Filterpressen wird ein Feststoff gewonnen, während das ausgepreßte geklärte Wasser ohne weitere Behandlung abgeleitet wird. Der gewonnene Feststoffkuchen wird sodann in zwei Stufen kompostiert, und zwar nicht in einem natürlichen Fermentationsprozeß, sondern in Druckbehältern mit Temperaturerhöhung in Stufe 1 und Druckluftzufuhr in Stufe 2. Auch ist eine elektrolytische Behandlung der Flüssigfraktion nicht vorgesehen.

Die US-A-4 559 073 beschreibt eine Kompostierung von tierischem Mist. Diesem werden Zeolite hinzugemischt. Es handelt sich dabei um ein hygroskopisches Aluminium - Silizium - Mineral, das zur Verdickung und schließlich zur Pelletierung und Fermentation des zu kompostierenden Materials dient. Die Kompostierung ist aerobisch.

Auch die DE-A-2 452 316, US-A-4 392 881, DE-A-2 703 842 sowie der Aufsatz "Experiments aimed at the Removal of Phosphate by Electrochemical Methods" in der Zeitschrift "Water Research", Vol.12 (1978), Seiten 1113-1116 zeigen keine Übereinstimmung mit dem Erfindungsgegenstand, da die erfindungswesentlichen Konditionierungsschritte fehlen. Die DE-A-2 703 842 betrifft zwar auch eine Aufbereitung von Gülle. Diese unterscheidet sich aber grundsätzlich dadurch, daß vor und während der Behandlung nach dem biologischen Belebtschlammverfahren gearbeitet wird und das Verfahren nachteilig mit einer vielschichtigen Arbeitsweise ineinandergreifender bzw. überlappender Stufen abläuft. Dazu werden koagulierend wirkende Chemikalien zur Filtrierung verwendet.

Es ist daher Aufgabe der Erfindung, ein Aufbereitungsverfahren für Gülle, eine Vorrichtung sowie eine bevorzugte Verwendung der Aufbereitungsprodukte vorzustellen, mittels derer die genannten Nachteile vermieden und die bestehenden Schwierigkeiten ausgeräumt werden können. Die Aufbereitung muß dabei in der Weise erfolgen, daß die entzogenen Nährstoffe transportwürdig werden und auch in Bereichen außerhalb normaler landwirtschaftlicher Benutzung eingesetzt werden können. Eine weitere Teilaufgabe besteht darin, die Phosphatbelastung der Flüssigfraktion zu senken.

Die Lösung der gestellten Aufgabe gelingt erfindungsgemäß dadurch, daß

    a) in einer ersten Stufe die Gülle durch Beimischung von Strohmehl konditioniert und dabei das C : N - Verhältnis auf einen Wert kleiner 50 : 1 eingestellt, diese Mischung homogenisiert und gleichzeitig belüftet wird,

    b) in einer zweiten Stufe die konditionierte und homogenisierte Gülle in eine feststoffarme Flüssigfraktion und eine mit Feststoffen angereicherte Feststoffraktion getrennt wird,

    c) die Feststoffraktion einem natürlichen Verrottungsprozeß im Hinblick auf ein Endprodukt mit hohen Hygiene- und Stabilitätsanforderungen mit temperaturoptimierter Intensivkompostierung unterzogen und dabei zu einem marktfähigen Produkt, dem Agrarkompost, weiterverarbeitet wird.

Je nach eingesetzter Trenntechnik können hierbei auf einfache Weise Ausdünnungen der Flüssigkeit an Laststoffen um 15 % bis ca. 35 % erreicht werden. Die Restflüssigkeit, nach wie vor ein wertvoller Volldünger, ist weitgehend problemlos als Kopfdünger einsetzbar, Überdüngungen können durch die Nährstoffverdünnung vorteilhaft vermieden werden. Verstopfungen in Verregnungsanlagen sind ausgeschlossen. Die beim Separieren anfallenden Feststoffe, der sogenannte Güllekuchen, kann auf zwei Arten weiterverarbeitet werden. Der Landwirt setzt ihn selbst - wie Festmist - auf entfernten landwirtschaftlich genutzten Flächen zur Düngung ein oder gibt ihn an viehlos arbeitende Ackerbaubetriebe ab. Als Trennaggregate kommen nahezu alle bekannten Vorrichtungen in Betracht, vorzugsweise Zentrifugen. Hierdurch wird der Trenneffekt optimiert, so daß beim Separieren nahezu die gesamte nicht in Lösung gegangene Trockensubstanz einschließlich der feinsten Schwebepartikel abgetrennt werden kann.

Mit den erfindungsgemäßen Maßnahmen können die im landwirtschaftlichen Betrieb nicht direkt verwertbaren Feststoffe einer außerlandwirtschaftlichen Verwertung zugeführt werden, z. B. im Sonderkulturanbau, Weinbau, sowie im Garten- und Zierpflanzenbau, in Hobbygärten, im Haushalt für Topfpflanzen sowie beispielsweise auch in Ziergärten im Wohnbereich. Das industriell betriebene Kompostieren ist technisch problemlos, gut zu überwachen und wenn erforderlich, einfach zu steuern. Die Endverarbeitung zu verkaufsfertiger Ware ist unproblematisch. Durch den natürlichen Verrottungsprozeß des Kompostierens - hier eine im Hinblick auf das Endprodukt mit seinen hohen Hygiene- und Stabilitätsanforderungen temperaturoptimierte Intensivkompostierung - ist das Endprodukt stabilisiert und konzentriert, die hygienische Beschaffenheit ist unbedenklich. Dasselbe gilt auch für den Gehalt an Stoffen und Rückständen, die als toxisch angesehen werden. Der Agrarkompost erfüllt lückenlos die zu erbringenden Eigenschaften für Kompost. Eine typische Analyse dieses Wirtschaftsdüngers nach einer Kompostierzeit von mehreren Wochen zeigt einen Gehalt an Trockensubstanz in g/kg (in % TS) = 410 (-), org.TS = 265 (65), ges.N = 9,5 (2,3), $P_2O_5$ = 13,5 (3,3), $K_2O$ = 9,5 (2,3), CaO = 13,0 (3,2), MgO = 6,0 (1,4). Ein Gewichtsverhältnis C : N < 50:1 (bezogen auf die Trockensubstanz) gestattet beispielsweise eine Verwertung der abgetrennten Flüssigkeit von Geflügelgülle in Biogasanlagen.

Mit großem Vorteil wird die Erfindung auch zur Verwertung von Schlämmen aus Hauskläranlagen verwendet. Fäkalienschlämme aus Drei-Kammer-Kleinkläranlagen sowie Schlämme aus Brauereien und Brennereien können auf diese Weise für eine Weiterverarbeitung in Großkläranlagen optimal aufbereitet werden, d. h. die Belastung der Großklärwerke mit Schlamm wird minimiert. Die Feststofffraktion wird vorteilhaft in ein marktfähiges Produkt umgewandelt.

Eine weitere Ausbildung des Aufbereitungsverfahrens nach der Erfindung sieht vor, daß die in der zweiten Stufe abgetrennte Flüssigfraktion zur Abtrennung der Phosphate elektrolytisch behandelt wird, wobei sich zumindest zwei übereinanderliegende Phasen bilden, nämlich eine nahezu phosphatfreie Flüssigkeit und eine phosphatangereicherte, relativ schwerere Schlammtrübe. Auf diese Weise wird eine erhöhte Phosphatbelastung im Flüssigkeitsaustrag vorteilhaft vermieden, gleichzeitig kann auch der Stickstoffgehalt gesenkt werden. Die phosphatarme Flüssigkeit kann nunmehr auch direkt dem Vorfluter einer örtlichen Kläranlage unter Vermeidung hoher Transportkosten (Ferntransport zur Flüssigdüngerverwertung) zugeführt werden. Da Kläranlagen zwar Stickstoff organisch abbauen können, bei Phosphaten aber große Probleme bestehen, wird durch die elektrolytische Behandlung erstmals ein Weg aufgezeigt, bei hohem Gülleanfall die Flüssigphase umweltverträglich zu entsorgen.

Eine weitere Ausgestaltung sieht vor, daß das C : N - Verhältnis im Hinblick auf eine maximale Laststoffausdünnung der Flüssigkeit von 35 - 70 % zumindest für eine Teilentsorgung entsprechend eingestellt wird. Auf diese Weise wird vorteilhaft eine Art Vorklärung der Flüssigkeit erzielt, indem auch bereits gelöste Verunreinigungen sowie feinste Schwebepartikel in die Feststoffphase überführt werden.

Ferner ist nach der Erfindung mit Vorteil vorgesehen, daß das C : N - Verhältnis im Hinblick auf die Verwertung der Feststoffe in einem Bereich zwischen 25 - 30 : 1 eingestellt wird. Zahlreiche Verwertungsmöglichkeiten - beispielsweise als Festmist oder für eine Weiterverarbeitung - werden durch diese Bereichsangabe optimal abgedeckt.

In einer weiteren Ausgestaltung der Erfindung ist vorgesehen, daß ein Teil der Flüssigkeit nach der Trennung zur ersten Stufe zurückgeführt wird. Auf diese Weise kann die Gülle bei geringstem Wasserverbrauch und nahezu konstantem C : N - Verhältnis konditioniert werden.

Eine weitere Ausgestaltung der Erfindung sieht vor, daß zur Einstellung des C : N - Verhältnisses Strohmehl mit einem Körnungsbereich je nach Medium zwischen 1 - 10 mm verwendet wird. Die Einmischmenge orientiert sich am N- Gehalt des Rohgutes. Das für eine Kompostierung optimale C : N - Verhältnis liegt im Bereich von 25-30 : 1. Rindergülle weist im allgemeinen ein ausreichendes C : N - Verhältnis auf, während bei Schweine- und Geflügelgülle regelmäßig C-Träger zugemischt werden müssen. Durch Verwendung von Strohmehl wird der Feststoffanteil aufgelockert, wobei der Separierkuchen zwischen 25-35 % Trockensubstanz aufweisen sollte. Die Strohmehleinmischung führt auch zu einer höheren Ausdünnung der Restflüssigkeit, da das poröse Strohmehl Feinstpartikel anzulagern vermag.

Die Schlammtrübe kann im Kreislauf in den Konditionierbehälter und/oder zur nachgeschalteten Fest/Flüssigtrennung rückgeführt werden, wodurch eine einfache Regulierung verschiedener Prozeßparameter ermöglicht wird. Besonders vorteilhaft erfolgt die elektrolytische Behandlung mehrstufig, wobei jeweils nur die phosphatarme Phase in der nächsten Stufe weiterbehandelt wird. Mit dieser Maßnahme können relativ kleine Sammelbehälter mit geeigneter Elektrodenanordnung Verwendung finden, die bei gleicher Größe und gleichem Aufbau kostengünstig herstellbar sind. Je nach gewünschtem Grad der Entphosphorung können beliebig viele Behälter hintereinandergeschaltet werden. Ferner kann die elektrolytische Behandlung aber auch kontinuierlich in einem Durchlaufverfahren erfolgen. Vorteilhaft läßt sich mittels dieser Maßnahme der Prozeß automatisieren und optimal einem schwankenden Gülleanfall unter weitgehender Konstanthaltung der wesentlichen Prozeßparameter anpassen.

Für die Vorrichtung wird die erfindungsgemäße Aufgabe dadurch gelöst, daß derin Konditionierbehälter zur Konditionierung der Gülle einer VollmantelschneckenZentrifuge vorgeschaltet ist, wobei der Konditionierbehälter eine Tauchpumpe mit Schneidwerk aufweist, und in der Leitung zum Aufgaberohr der Zentrifuge eine Förderpumpe angeordnet ist, wobei der Konditionierungsbehälter in eine Aufgabekammer sowie eine durch eine Wand abgetrennte Mischkammer aufgeteilt und die Tauchpumpe mit Schneidwerk im unteren Bereich der Trennwand angeordnet ist.

Von weiterem Vorteil ist es, wenn dem Flüssigkeitsaustrag der Zentrifuge ein Sammelbehälter nachgeschaltet ist, der über ein Leitungssystem mit dem Konditionierbehälter zur Flüssigkeitsrückführung verbunden ist. Ein derartiger Sammelbehälter ermöglicht je nach Größe eine Speicherung und diskontinuierliche Entnahme. Ferner werden Analyseschwankungen des Flüssigkeitsaustrags weitgehend ausgeglichen. Erfindungsgemäß ist der Behälter mit Elektroden versehen, die an eine Gleichspannungsquelle angeschlossen sind, wobei vorteilhaft dann eine Anschaltung der Elektroden erfolgt, wenn hohe Phosphatgehalte die Entsorgung der Flüssigkeit in Klärwerken nicht erlaubt. Ferner weist der Behälter einen Überlauf auf, über den die phosphatarme Flüssigkeit austragbar ist, während die Schlammtrübe über die Leitung mittels Förderpumpe in den Konditionierbehälter transportierbar ist. Hierbei handelt es sich um eine besonders einfache und kostengünstige Schaltungsmaßnahme bzw. konstruktive Ausgestaltung eines Sammelbehälters.

Es ist zweckmäßig, wenn Konditionierbehälter, Zentrifuge, Sammelbehälter, sowie deren Leitungsverbindungen, Pumpen und Antriebe als mobile Einheit ausgebildet sind. Eine einzelbetrieblich möglicherweise unwirtschaftliche Separierung der Gülle mit den zu fordernden hohen Abscheidegraben kann durch überbetrieblichen Maschineneinsatz gelöst werden. Auf diese Weise kann die Aufbereitung kostengünstig im Lohnauftrag durchgeführt und hohe Investitionskosten gespart werden.

Eine besonders vorteilhafte Anwendung der kompostierten Feststoffanteile, hergestellt nach dem Aufbereitungsverfahren, vorzugsweise unter Verwendung von Rindergülle als Ausgangsstoff sieht vor, daß der Agrarkompost als Naturheilmittel zur therapeutischen Behandlung des menschlichen oder tierischen Körpers äußerlich angewendet wird. Er eignet sich besonders zur Hautpflege, zur Behandlung von Gesichtsakne, von Abschürfungen und Wunden, zur Behandlung von Verspannungen im Rückenbereich sowie gegen Krampfaderbeschwerden.

Weitere Einzelheiten, Merkmale und Vorteile der Erfindung ergeben sich aus den nachstehenden Erläuterungen des in den Zeichnungen schematisch dargestellten Ausführungsbeispieles.

Es zeigen:

Fig. 1    Verfahrensprinzip zur Erzeugung von Agrarkompost und einem feststofffreien Flüssigdünger

Fig. 2    schematische Darstellung des Verfahrensablaufes zur Aufbereitung von Gülle

Fig. 3 a    Mischbehälter nach Fig. 2 in schematischer Draufsicht

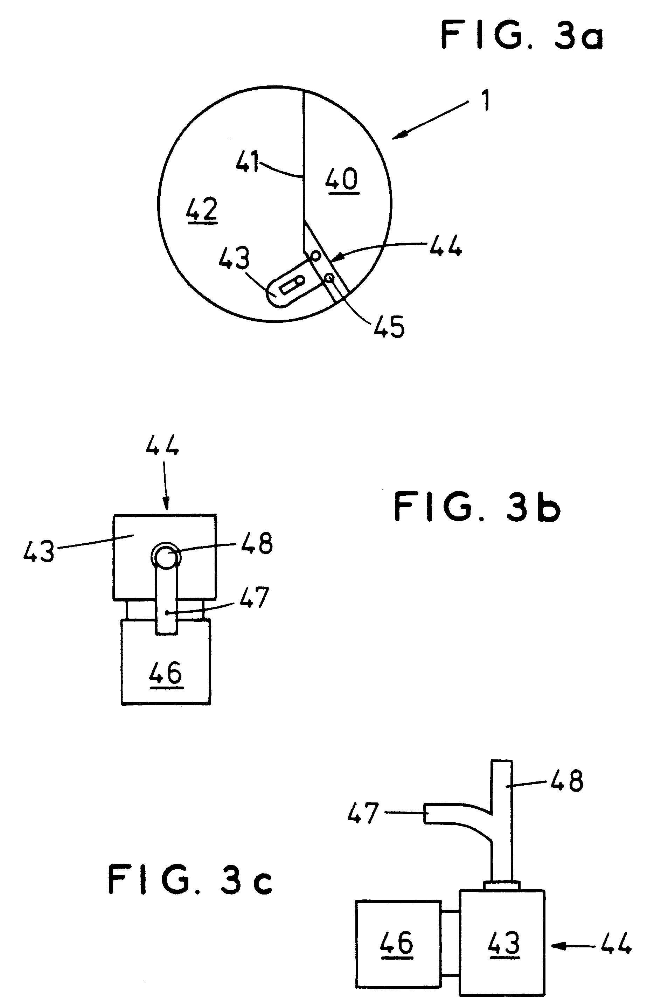

Fig. 3 b    Tauchpumpenanordnung gemäß Fig. 3 a in schematischer Draufsicht

Fig. 3 c    Tauchpumpenanordnung gemäß Fig. 3 b in schematischer Seitenansicht

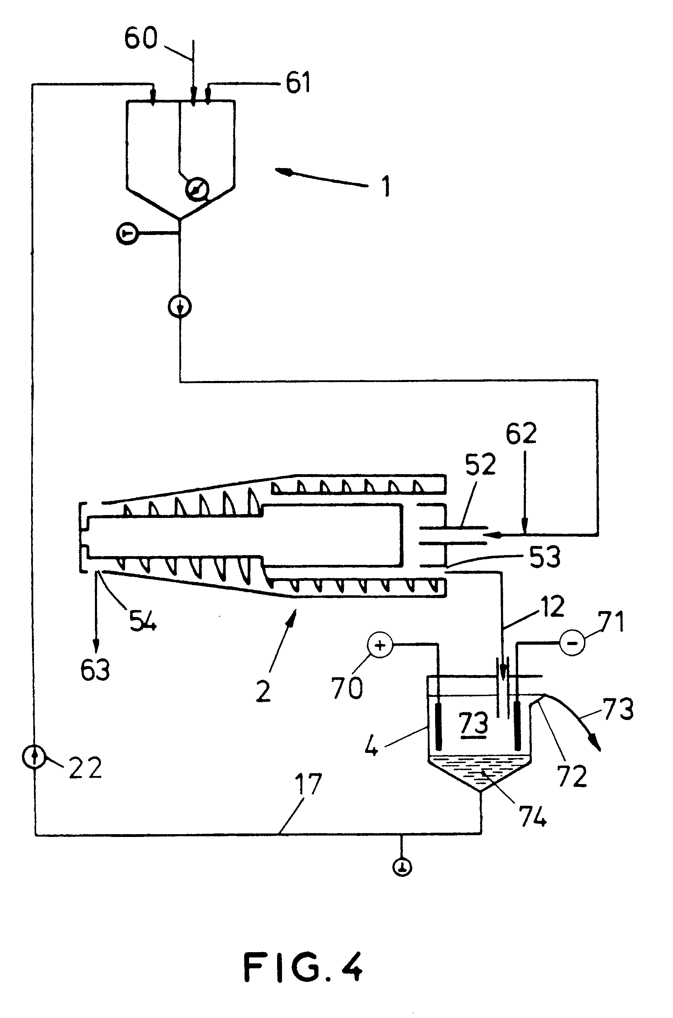

Fig. 4    schematische Darstellung des Verfahrensablaufes zur Aufbereitung von Gülle mit elektrolytischer Behandlung des Flüssigkeitsaustrages

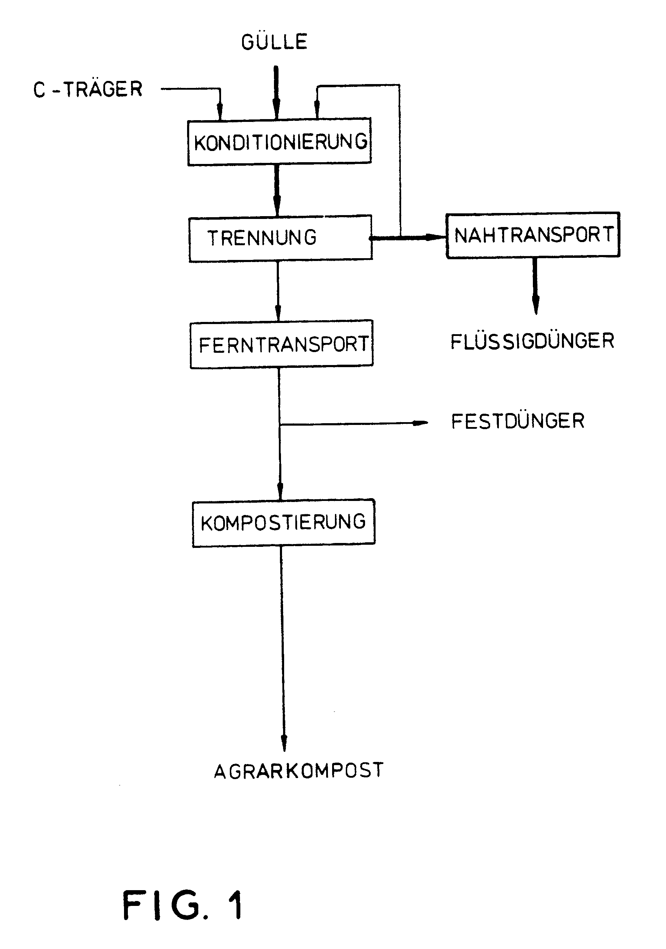

Figur 1 zeigt das Verfahrensprinzip, wonach gesammelte Gülle zunächst homogenisiert und konditioniert wird. Zur Einstellung eines gewünschten Kohlenstoff zu Stickstoff - Verhältnisses wird Strohwehl als organischer Kohlenstoffträger, sowie zur Verbesserung der nachfolgenden Trennung sonstige Zusätze oder Hilfsmittel (z.B. Polyelektrolyte) hinzugefügt. Nach Abtrennung der Flüssigkeitsfraktion in der Separierstufe kann diese als Flüssigdünger nach Transport im Nahbereich, wie bisher aber problemloser, landwirtschaftlich genutzt werden. Für die Feststoffe lohnt der Ferntransport zur Verwertung als Festmist, vorzugsweise aber zur Weiterverarbeitung in einer industriellen Kompostierungsanlage. Das fertige Endprodukt kann nunmehr einer außerlandwirtschaftlichen Nutzung zugeführt werden.

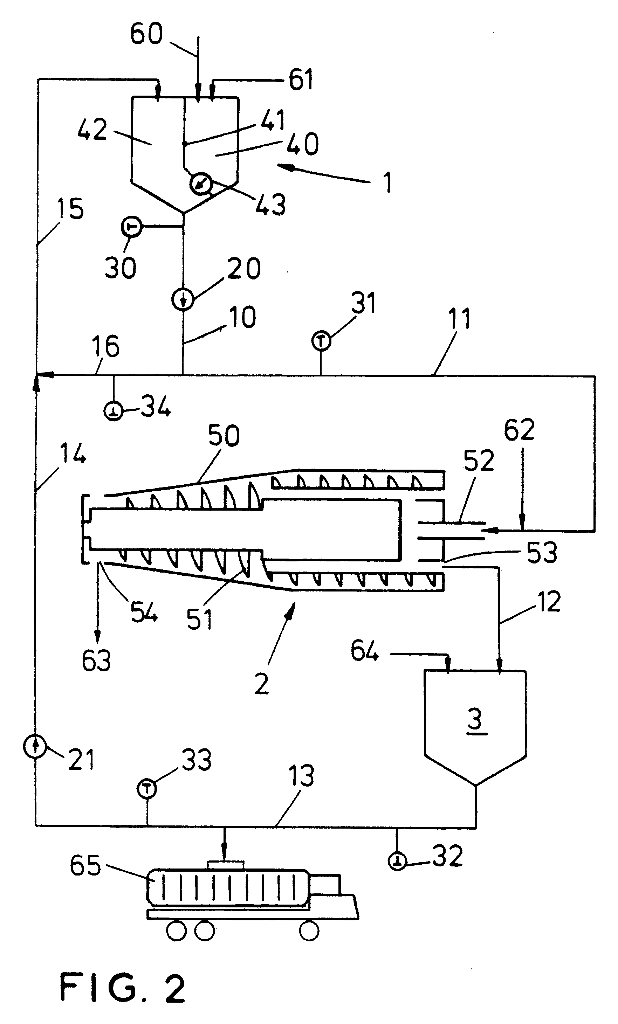

Die in Figur 2 dargestellte Aufbereitungsanlage mit der erfindungsgemäßen Vorrichtung zur Durchführung des Verfahrens besteht im wesentlichen aus einem Konditionierbehälter (1) und einer Trenneinrichtung (2). Ferner ist ein Sammelbehälter (3) für den Flüssigdünger vorgesehen. Die Aggregate (1 - 3) sind miteinander über die Leitungen (10 - 16) verbunden. In den Leitungen sind Förderpumpen (20, 21) und Regelventile (30 - 34) vorgesehen.

Der Konditionierungsbehälter (1) ist unterteilt in eine Aufgabekammer (40) sowie eine durch die Wand (41) abgetrennte Mischkammer (42), wobei in der Trennwand (41) im unteren Bereich eine Tauchpumpe mit Schneidwerk (43) angeordnet ist. Die Mischkammer (42) kann ferner vorteilhaft ein Rührwerk (nicht dargestellt) aufweisen. Die Trenneinrichtung (2) ist als Vollmantelschnecken- Zentrifuge mit dem Trommelmantel (50), der Förderschnecke (51), dem Aufgaberohr (52), dem Flüssigkeitsaustrag (53) und dem Rückstandsaustrag (54) dargestellt.

Bei Betrieb der Anlage gemäß Figur 2 wird Gülle (60) mittels einer Förderpumpe und Ansaugleitung (nicht dargestellt) in die Aufgabekammer (40) des Konditionierbehälters (1) geleitet, unter Zugabe von Strohmehl (61) oder auch anderen Zusätzen und Hilfsmitteln, wie beispielsweise Polyelektrolyten. Über die Tauchpumpe mit Schneidwerk (43) gelangt die zur Sedimentation neigende Gülle, die zudem mit Strohresten vermengt ist, in die Mischkammer (42), wo die Homogenisierung und Konditionierung abgeschlossen wird. Über die Leitungen (10, 11) bei geöffnetem Regelventil (30) wird die Gülle mittels der Förderpumpe (20) zum Aufgaberohr (52) der Zentrifuge (2) gefördert. Für eine genaue Kontrolle des in der Mischkammer einzustellenden C : N - Verhältnisses können Proben entnommen werden, und durch Absperrung des Ventils (31) kann die Gülle gegebenenfalls bei geöffnetem Regelventil (34) über die Leitung (15) zur Mischkammer (42) zurückgeführt werden, bei weiterer Zugabe von Strohmehl (61). Im allgemeinen ist jedoch das Regelventil (34) geschlossen und die Leitungen (10, 11) zum Aufgaberohr (52) frei. Zur besseren Trennung in der Zentrifuge (2) können gegebenenfalls Additive (62), beispielsweise Polyelektrolyte zugesetzt werden, sofern diese nicht schon bei (61) der Aufgabekammer (40) in ausreichender Menge zugeführt wurden und eine Fein- bzw. Nachdosierung erforderlich ist.

Die Betriebsparameter der Zentrifuge (2) müssen hinsichtlich der Differenzdrehzahl zwischen Schnecke (51) und Trommel (50), der Höhe des Flüssigkeitsstandes in der Trommel (50), sowie der Zufuhr an Gülle über die Leitung (11) eingestellt und geregelt werden. Die Differenzdrehzahl zwischen Schnecke (51) und der Trommel (50) ist bei sehr dünnen Güllen mit einer Trockensubstanzmenge von nur 2-4 % bei etwa 20 Upm und bei sehr dickflüssigen Güllen mit etwa 20 % Trockensubstanz zwischen 60-70 Upm einzustellen.

Der in der Zentrifuge (2) abgetrennte Feststoff wird über die Förderschnecke (51) zum Rückstandsaustrag (54) transportiert und verläßt die Zentrifuge (2) als krümeliger Güllekuchen (63) mit Feststoffteilen bis zu 1 μm. Der Güllekuchen (63) kann nun seiner weiteren Verwendung, vorzugsweise einer industriellen, temperaturoptimierten Intensiv- Kompostierung zur Erzeugung von Agrarkompost, zugeführt werden. Der von den Feststoffen befreite Flüssigdünger gelangt vom Flüssigkeitsaustrag (53) über die Leitung (12) zum Sammelbehälter (3), wo gegebenfalls bestimmte gebräuchliche Additive (64) zur Düngeroptimierung zugesetzt werden können. Nach verlassen des Sammelbehälters (3) gelangt der Flüssigdünger über die Leitung (13) zu einem Transportfahrzeug (65), das beispielsweise eine Verregnungsanlage versorgt. Ein Teil des Flüssigdüngers kann bei geöffnetem Regelventil (33) mittels der Förderpumpe (21) über die Leitungen (14, 15) bei Bedarf im Kreislauf geführt werden.

Die Figuren 3a bis 3c zeigen den Konditionierbehälter (1) sowie die Tauchpumpe mit Schneidwerk (43) in schematischer Darstellung. Nach Figur 3a ist die Tauchpumpe (43) in der Zwischenwand (41) zwischen Aufgabekammer (40) und Mischkammer (42) angeordnet. Die Eintrittsöffnung (44) ist in etwa radial in Bezug auf den Behälter (1) angeordnet, darüber sind ein oder mehrere Flüssigkeitszulaufrohre (45) - z. B. auch für den Rücklaufanteil - angebracht. Nach den Figuren 3b und 3c besitzt die Tauchpumpe (43) einen Antrieb (46) und weist im Bereich der Mischkammer (42) ein drehbares Umspülrohr (47) und ein Absaugrohr (48) auf, an das eine Förderpumpe (nicht dargestellt) zur Versorgung der Trenneinrichtung angeschlossen werden kann. Der Antrieb (46) kann dabei in beliebiger Weise elektrisch, ölhydraulisch oder auf sonstige Art erfolgen.

Figur 4 zeigt, daß der Behälter (4) mit Elektroden (70, 71) versehen sein kann, die an eine Gleichspannungsquelle angeschlossen sind. Dabei weist der Behälter (4) einen Überlauf (72) auf, über den die phosphatarme Flüssigkeit (73) austragbar ist, während die Schlammtrübe (74) über die Leitung (17) mittels Förderpumpe (22) in den Konditionierbehälter (1) transportierbar ist.

Bei Betrieb der Anlage gemäß Figur 4 weist eine Probe des Flüssigkeitsaustrages (53) der Zentrifuge (2) beispielsweise an Trockensubstanz TS = 17 g/kg auf, an organischer Trockensubstanz OTS = 64,7 % TS, an $P_2O_5$ = 1,3 g/kg und Gesamtstickstoff N = 2,42 g/kg. Nach einer elektrolytischen Behandlung bei 12 V Gleichstrom mit Eisenelektroden nach ca. 70 Stunden Behandlungszeit hatte die phosphatarme Phase folgende Analyse: TS = 12, OTS = 50, $P_2O_5$ = 0,13, N = 1,57. Die phosphatarme, klare und etwas gelbliche Flüssigkeit (73) weist mit 0,13 g/kg nur noch 1/10 des ursprünglichen Gehaltes an Phosphat auf und kann deshalb problemlos direkt einer Kläranlage zugeführt werden. Auch der Stickstoffgehalt wurde hierbei auf etwa 65 % gesenkt. Die Gleichspannung kann bis zu 60 V erhöht werden. Als Elektrodenmaterial (70, 71) können beliebige handelsübliche Metalle oder sonstige Elektronendonatoren und -akzeptoren verwendet werden. Die jeweilige konstruktive Ausgestaltung der Elektrolysebehälter (4) und Elektrodenanordnungen (70, 71) sowie der Stromschaltungen (beispielsweise eine Spannungsumpolung nach vorbestimmter Zeit zur Verhinderung einer Passivierung) ist dem auf diesem Gebiet tätigen Fachmann anheimgestellt.

**Patentansprüche**

1. Verfahren zur Aufbereitung und/oder Entsorgung von Gülle aus Wirtschaftsbetrieben mit Nutztierhaltung oder aus Hauskläranlagen, **dadurch gekennzeichnet, daß**

a) in einer ersten Stufe die Gülle durch Beimischung von Strohmehl konditioniert und dabei das C : N - Verhältnis auf einen Wert kleiner 50 : 1 eingestellt, diese Mischung homogenisiert und gleichzeitig belüftet wird,

b) in einer zweiten Stufe die konditionierte und homogenisierte Gülle in eine feststoffarme Flüssigfraktion und eine mit Feststoffen angereicherte Feststoffraktion getrennt wird,

c) die Feststoffraktion einem natürlichen Verrottungsprozeß im Hinblick auf ein Endprodukt mit hohen Hygiene- und Stabilitätsanforderungen mit temperaturoptimierter Intensivkompostierung unterzogen und dabei zu einem marktfähigen Produkt, dem Agrarkompost, weiterverarbeitet wird.

**2.** Verfahren nach Anspruch 1, **dadurch gekennzeichnet,** daß die in der zweiten Stufe abgetrennte Flüssigfraktion zur Abtrennung der Phosphate elektrolytisch behandelt wird, wobei sich zumindest zwei übereinanderliegende Phasen bilden, nämlich eine nahezu phosphat-freie Flüssigkeit und eine phosphatangerei-cherte, relativ schwere Schlammtrübe.

**3.** Verfahren nach Anspruch 1 oder 2, **dadurch gekennzeichnet,** daß das C : N - Verhältnis im Hinblick auf eine maximale Laststoffausdünnung der Flüssigkeit von 35 - 70 % zumindest für eine Teilentsorgung entsprechend eingestellt wird.

**4.** Verfahren nach einem oder mehreren der Ansprüche 1 bis 3, **dadurch gekennzeichnet,** daß das C : N - Verhältnis im Hinblick auf die Verwertung der Feststoffe in einem Bereich zwischen 25 - 30 : 1 eingestellt wird.

**5.** Verfahren nach einem oder mehreren der Ansprüche 1 bis 4, **dadurch gekennzeichnet,** daß ein Teil der Flüssigfraktion zur ersten Stufe zurückgeführt wird.

**6.** Verfahren nach einem oder mehreren der Ansprüche 1 bis 5, **dadurch gekennzeichnet,** daß bei der elektrolytischen Behandlung der Flüssigfraktion anfallende schwerere Schlammtrübe im Kreislauf in den Konditionierbehälter und/oder zur nachgeschalteten Fest/Flüssigtrennung rückgeführt wird.

**7.** Verfahren nach einem oder mehreren der Ansprüche 1 bis 6, **dadurch gekennzeichnet,** daß die elektrolytische Behandlung mehrstufig erfolgt, wobei jeweils nur die phosphatarme Phase in der nächsten Stufe weiterbehandelt wird.

**8.** Verfahren nach einem oder mehreren der Ansprüche 1 bis 7, **dadurch gekennzeichnet,** daß zur Einstellung des C : N - Verhältnisses Strohmehl mit einem Körnungsbereich zwischen 1 und 10 mm verwendet wird.

**9.** Vorrichtung zur Aufbereitung und/oder Entsorgung von Gülle aus Wirtschaftsbetrieben mit Nutztierhaltung oder aus Hauskläranlagen, zur Durchführung des Verfahrens nach einem der vorhergehenden Ansprüche, mit einem Kondi-tionierungsbehälter zur Aufnahme und Kondi-tionierung der Gülle, **dadurch gekennzeich-net,**

a) daß der Konditionierungsbehälter (1) einer Vollmantel-Schneckenzentrifuge (2) vorgeschaltet ist, wobei der Konditionierungsbehälter (1) eine Tauchpumpe (43) mit Schneidwerk aufweist, und in der Leitung (10) zum Aufgaberohr (52) der Zentrifuge (2) eine Förderpumpe (20) angeordnet ist,
b) daß der Konditionierungsbehälter (1) in eine Aufgabekammer (40) sowie eine durch eine Wand (41) abgetrennte Mischkammer (42) aufgeteilt und die Tauchpumpe mit Schneidwerk (43) in der Trennwand (42) im unteren Bereich angeordnet ist.

**10.** Vorrichtung nach Anspruch 9, **dadurch gekennzeichnet,** daß dem Flüssigkeitsaustrag (53) der Zentrifuge (2) ein Sammelbehälter (4) nachgeschaltet ist, der über ein Leitungssystem (13, 14, 15, 17) mit dem Konditionierungsbehälter (1) zur Flüssigkeitsrückführung verbunden ist, wobei der Behälter (4) mit Elektroden (70, 71) versehen ist, die an eine Gleichspannungsquelle angeschlossen sind, und wobei der Behälter (4) einen Überlauf (72) aufweist, über den die phosphatarme Flüssigkeit (73) austragbar ist, während die Schlammtrübe (74) über die Leitung (17) mittels Förderpumpe (22) in den Konditionierungsbehälter (1) transportierbar ist.

## Claims

**1.** Method for the treatment and/or disposal of liquid manure from industrial units which keep useful animals or from domestic sewage treatment plants, **characterised in that**
a) in a first stage the liquid manure is conditioned by mixing with straw meal and in so doing the C : N ratio is set to a value of less than 50 : 1, this mixture is homogenised and at the same time aerated,
b) in a second stage the conditioned and homogenised liquid manure is separated into a liquid fraction with a low solids content and a solids fraction enriched with solids,
c) the solids fraction is subjected to a natural rotting process with a view to an end product with high hygiene and stability re-quirements with temperature-optimized in-tensive composting and in so doing is processed to a marketable product, agricultural compost.

**2.** Method according to claim 1, **characterised in that** the liquid fraction separated in the second stage is treated electrolytically for the separation of the phosphates, with at least two superimposed phases being formed, namely a virtually phosphate-free liquid and a phosphate-enriched, relatively heavy sludge pulp.

3. Method according to claim 1 or 2, **characterised in that** the C : N ratio is with a view to a maximum thinning out of pollutants from the liquid of 35 - 70% correspondingly set at least for a partial disposal.

4. Method according to one or more of claims 1 to 3, **characterized in that** the C : N ratio is with a view to the recycling of the solids set in a range between 25 - 30 : 1.

5. Method according to one or more of claims 1 to 4, **characterized in that** a part of the liquid fraction is fed back to the first stage.

6. Method according to one or more of claims 1 to 5, **characterized in that** heavier sludge pulp obtained during the electrolytic treatment of the liquid fraction is recirculated into the conditioning vessel and/or for subsequent solid/liquid separation.

7. Method according to one or more of claims 1 to 6, **characterized in that** the electrolytic treatment takes place in a plurality of stages, with in each case only the low phosphate phase being processed in the next stage.

8. Method according to one or more of claims 1 to 7, **characterized in that** for the setting of the C : N ratio straw meal with a grain size range between 1 and 10 mm is used.

9. Apparatus for the treatment and/or disposal of liquid manure from industrial units which keep useful animals or from domestic sewage treatment plants, for the implementation of the method according to any one of the preceding claims, with a conditioning vessel for the accommodation and conditioning of the liquid manure, **characterized in that**
    a) the conditioning vessel (1) is connected upstream of a solid-wall helical-conveyor centrifuge (2), the conditioning vessel (1) comprising a submerged pump (43) with cutting device, and a feed pump (20) is provided in the conduit (10) leading to the delivery pipe (52) of the centrifuge (2),
    b) the conditioning vessel (1) is sub-divided into a delivery compartment (40) and a mixing compartment (42) which is separated by a wall (41) and the submerged pump with cutting device (43) is disposed in the separating wall (42) in the lower region.

10. Apparatus according to claim 9, **characterized in that** there is connected downstream of the liquid discharge (53) of the centrifuge (2) a collection vessel (4) which is connected via a piping system (13,14,15,17) with the conditioning vessel (1) for the liquid feedback, the vessel (4) being provided with electrodes (70,71) which are connected to a d.c. voltage source, and the vessel (4) comprising an overflow (72) via which the liquid (73) with a low phosphate content can be discharged, while the sludge pulp (74) can be transported into the conditioning vessel (1) via the conduit (17) by means of feed pump (22).

**Revendications**

1. Procédé de traitement et/ou d'élimination du purin issu des exploitations avec élevage d'animaux domestiques ou de dispositifs domestiques d'épuration, caractérisé en ce que
    a) dans un premier stade, le purin est conditionné par mélange avec de la farine de paille et que le rapport C : N est fixé, de ce fait, à une valeur inférieure à 50 : 1, et que ce mélange est homogénéisé et en même temps aéré,
    b) dans un deuxième stade, le purin conditionné et homogénéisé est séparé en une fraction liquide appauvrie en matières solides et une fraction solide enrichie en matières solides,
    c) la fraction solide est soumise à un processus naturel de décomposition avec pour objectif un produit final avec des spécifications élevées d'hygiène et de stabilité et composté de manière intensive à température optimisée, traité en outre, ultérieurement pour l'obtention d'un produit commercialisable, le compost agraire.

2. Procédé selon la revendication 1, caractérisé en ce que la fraction liquide séparée au deuxième stade est traitée de façon électrolytique pour séparation des phosphates, avec au moins deux phases en série, plus précisément un liquide presque exempt de phosphates, et une boue enrichie en phosphates, relativement lourde.

3. Procédé selon la revendication 1 ou 2, caractérisé en ce que le rapport C : N est fixé avec pour objectif un éclaircissement maximal en matières lourdes d'au moins 35 à 70 %, en vue d'une élimination partielle correspondante.

4. Procédé selon l'une quelconque des revendications 1 à 3, caractérisé en ce que le rapport C : N est fixé avec pour objectif une utilisation des matières solides dans un domaine 25 à 30 : 1.

5. Procédé selon l'une quelconque des revendications 1 à 4, caractérisé en ce qu'une partie de la fraction liquide est ramenée au premier stade.

6. Procédé selon l'une quelconque des revendications 1 à 5, caractérisé en ce que, par traitement électrolytique de la fraction liquide, les boues les plus lourdes sont ramenées dans le cycle de fonctionnement, dans le réservoir de conditionnement et/ou dans le dispositif de séparation solide/liquide qui lui fait suite.

7. Procédé selon l'une quelconque des revendications 1 à 6, caractérisé en ce que le traitement électrolytique se fait en plusieurs étapes, et que, seule la phase appauvrie en phosphates est traitée dans l'étape suivante.

8. Procédé selon l'une quelconque des revendications 1 à 7, caractérisé en ce que, pour la fixation du rapport C : N, on utilise de la farine de paille avec une granulométrie comprise entre 1 et 10 mm.

9. Dispositif de traitement et/ou d'élimination du purin issu des exploitations avec élevage d'animaux domestiques ou d'installations domestiques d'épuration, pour la mise en oeuvre du procédé selon l'une quelconque des revendications précédentes, avec un réservoir de conditionnement pour le recueil et le conditionnement du purin, caractérisé en ce que:
a) le réservoir de conditionnement (1) est précédé d'une centrifugeuse à vis sans fin et à bol plein et comporte une pompe immergée (43) avec découpage, et qu'une pompe de circulation (20) est placée dans la canalisation (10) allant vers le tuyau d'admission 52 de la centrifugeuse (2).
b) le réservoir de conditionnement (1) est divisé en une chambre de réception (40) ainsi qu'une chambre de mélange (42) séparée par une paroi (41) et que la pompe immergée avec découpage (43) est placée dans la partie inférieure de la cloison de séparation (41).

10. Dispositif selon la revendication 9, caractérisé en ce que le produit liquide (53) issu de la centrifugeuse (2) est amené à un réservoir de collecte (4), relié par un système de canalisations (13, 14, 15, 17) au réservoir de conditionnement (1) en vue de la circulation en retour du liquide, le réservoir (4) étant pourvu d'électrodes (70, 71) reliées à une source de tension continue, et comportant un trop-plein (72) permettant l'extraction du liquide appauvri en phosphates (73), pendant que la boue (74) est transportée dans le réservoir de conditionnement (1) par la canalisation (17) au moyen de la pompe de circulation (22).

GÜLLE

C -TRÄGER

KONDITIONIERUNG

TRENNUNG → NAHTRANSPORT → FLÜSSIGDÜNGER

FERNTRANSPORT → FESTDÜNGER

KOMPOSTIERUNG

AGRARKOMPOST

# FIG. 1

10

# FIG. 2

# FIG. 3a

1

41

40

42

43

44

45

# FIG. 3b

44

43

48

47

46

# FIG. 3c

47

48

46

43

44

# FIG.4